(19) **Europäisches Patentamt / European Patent Office / Office européen des brevets**

(11) **EP 2 811 379 B1**

(12) **EUROPEAN PATENT SPECIFICATION**

(45) Date of publication and mention
of the grant of the patent:
**25.04.2018 Bulletin 2018/17**

(51) Int Cl.:
***G06F 3/041*** (2006.01)     *G06F 3/044* (2006.01)
*G09G 3/36* (2006.01)

(21) Application number: **14150118.9**

(22) Date of filing: **03.01.2014**

(54) **Touch liquid crystal display device**

Berührungsflüssigkristallanzeigevorrichtung

Dispositif d'affichage tactile à cristaux liquides

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.06.2013 CN 201310224523**

(43) Date of publication of application:
**10.12.2014 Bulletin 2014/50**

(73) Proprietor: **FocalTech Systems, Ltd.
Grand Cayman (KY)**

(72) Inventors:
• **Mo, Lianghua
518057 Shenzhen (CN)**
• **Ouyang, Guang
518057 Shenzhen (CN)**

(74) Representative: **HGF Limited
Delta House
50 West Nile Street
Glasgow G1 2NP (GB)**

(56) References cited:
**EP-A1- 2 224 277      WO-A2-2005/114369
WO-A2-2012/053792     DE-U1-202006 010 488
US-A1- 2009 153 509   US-A1- 2010 182 273
US-A1- 2012 306 802   US-A1- 2012 319 966
US-A1- 2013 207 934**

• **PARK H-S ET AL: "Touch-Sensitive Active-Matrix
Display with Liquid-Crystal Capacitance Detector
Arrays", JAPANESE JOURNAL OF APPLIED
PHYSICS, JAPAN SOCIETY OF APPLIED
PHYSICS, JP, vol. 49, no. 3, 1 March 2010
(2010-03-01), pages 3CC01-1, XP001554089,
ISSN: 0021-4922, DOI: 10.1143/JJAP.49.03CC01
[retrieved on 2010-03-23]**

## Description

### Field of the disclosure

The present disclosure relates to the touch control technology, and in particular, to a touch display device.

### Background of the technology

The On-cell arrangement, in which a touch panel function module is embedded on the upper surface of a color filter in a display screen, is widely used in existing touch panels. Horizontal and vertical electrodes are formed on the upper surface of the first glass substrate of a Liquid Crystal Display (LCD), and then are connected to a touch control chip through a Flexible Printed Circuit (FPC) by wires. In the arrangement that horizontal and vertical electrodes are employed, the horizontal and vertical electrodes are arranged extending on the touch screen from one side to an opposite side and occupy a long extent on the touch screen. Accordingly, for the case of touching with multiple fingers, a same electrode may be touched by the multiple fingers. Consequently, noises caused by the multiple fingers may be accumulated on the same electrode, and the interference of the noises is enhanced.

WO2005114369 (A2) discloses a touch panel having a transparent capacitive sensing medium configured to detect multiple touches or near touches that occur at the same time and at distinct locations in the plane of the touch panel and to produce distinct signals representative of the location of the touches on the plane of the touch panel for each of the multiple touches.

US2012306802 (A1) discloses a touch sensor. The touch sensor includes at least two capacitive sensing electrodes, each of the at least two capacitive sensing electrodes having a surface area that is smaller than an area of a touch from a user. The at least two capacitive sensing electrodes each include a substrate, a single conductive element formed on the substrate, and electronic circuitry coupled to the at least two capacitive sensing electrodes for measuring a self-capacitance of the at least two capacitive sensing electrodes. A position corresponding to the touch of a user is determined by the electronic circuitry based on a difference of the measured self-capacitance between the at least two capacitive sensing electrodes.

DE202006010488 (U1) discloses a capacitive position sensor comprises a substrate having an arrangement of electrodes mounted on a single surface thereof, the electrodes arranged so as to define an array of sensing cells arranged in columns and rows to form a sensing area. Each sensing cell includes a column sensing electrode and a row sensing electrode. The column sensing electrodes of sensing cells in the same column are electrically coupled together, and the row sensing electrodes of sensing cells in the same row are electrically coupled together. Row sensing electrodes of sensing cells at opposing ends of at least one of the rows are connected together by an electrical connection made outside of the sensing area so that there is no requirement for electrical connections to cross within the sensing area, providing a capacitive position sensor having a sensing area with electrodes on only one side of a substrate.

US2010182273 (A1) discloses a common electrode 43 for display, which is originally provided in a liquid crystal display element, is also used as one (drive electrode) of a pair of electrodes for a touch sensor, and the other (detection-electrode-for-the-sensor 44) of the pair of electrodes is newly formed. An existing common drive signal Vcom as a drive signal for display is used in common for a drive signal for the touch sensor. A capacitance is formed between the common electrode 43 and the detection-electrode-for-the-sensor 44, and touch detection is performed by utilizing a change of this capacitance caused by a finger touch of a user. Thus, a display device with a touch sensor is also applicable to a mobile device in which electric potential of the user is inconstant in many cases.; The newly-provided electrode is only the detection-electrode-for-the-sensor 44, and it is unnecessary to newly prepare a drive signal for the touch sensor. Therefore, the configuration is simple.

EP2224277 (A1) discloses a display having data lines that can be configured between a display mode and a touch mode. The display can have sense regions for sensing a touch or near touch on the display during the touch mode. These same regions can display graphics or data on the display during the display mode. During display mode, the data lines in the sense regions can be configured to couple to display circuitry in order to receive data signals from the circuitry for displaying. During touch mode, the data lines in the sense regions can be configured to couple to corresponding sense lines in the regions, which in turn can couple to touch circuitry, in order to transmit touch signals to the circuitry for sensing a touch or near touch.; Alternatively, during touch mode, the data lines in the sense regions can be configured to couple to ground in order to transmit residual data signals to ground for discarding.

XP-001554089 discloses two types of touch in-cell technology for active-matrix liquid crystal displays (AMLCDs) with liquid-crystal capacitance detector arrays embedded in a hydrogenated amorphous silicon (a-Si:H)-based backplane. The scanning method can determine and provide multiple simultaneous touch locations on the basis of the information extracted from each sensing element. On the other hand, the crossing method provides the position information from the coordinate information such that the system complexity and power consumption are expected to be considerably reduced.

US2009153509 discloses an exemplary touch panel including a substrate, transparent conductive layers, a capacitive sensing circuit, and conductive wires. The transparent conductive layers are disposed on a surface of the substrate and spaced apart from each other. Each transparent conductive layer includes a carbon nanotube layer. The carbon nanotube layer includes carbon nanotubes. The conductive wires respectively electrically connect the transparent conductive layers to the capacitive sensing circuit. A display device using the touch panel is also provided. US2012319966 discloses embodiments of the invention generally providing an input device having a smaller overall physical size and a lower production cost, and is minimally affected by electrical interference versus conventional input devices. Embodiments discussed herein include an input device that has a sensor controller disposed in close proximity to a plurality of sensing elements that are used to sense and acquire positional information of an input object. In one embodiment, the sensor controller and at least portions of the sensor electrodes are disposed between two transparent substrates that are positioned near a display device. In some embodiments, the sensor controller is disposed in an edge region of a substrate which has a sensing region through which the adjacently positioned sensor electrodes are configured to sense the presence of an input object.

## SUMMARY

Independent claim 1 defines the matter, for which protection is sought.

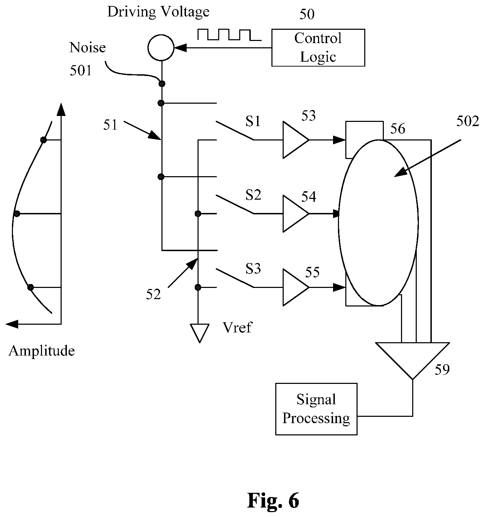

Merely embodiments related to the solution of the problem of reducing the capacitance of the electrodes being detected and for preventing a false touch caused by a water drop described with regard to Fig. 6 represent embodiments of the presently claimed invention. All other occurrences of the word "embodiment(s)" refer to examples which were originally filed but which do not represent embodiments of the presently claimed invention; these examples are still shown for illustrative purposes only. The embodiments of the invention provide a touch display device, which can decrease the interference of noise in the detection of touch point.

The touch display device according to an embodiment includes:

a first substrate, a second substrate and a liquid crystal layer disposed between the first substrate and the second substrate;

a plurality of sensing electrodes disposed on the upper surface of the first substrate, where the plurality of sensing electrodes are arranged in a two-dimensional array; and

a touch control chip bound onto the upper surface of the first substrate, where each of the sensing electrodes is connected to the touch control chip via an independent wire;

where the touch control chip is configured to detect the capacitance of each sensing electrode; the touch control chip detects each sensing electrode with a simultaneous driving mode,

the touch control chip (10) being configured in the simultaneous driving mode to detect the self-capacitance of each sensing electrode (19, 57) by:

driving and detecting the sensing electrode (19, 57) and driving the rest of the sensing electrodes (19, 56, 58) simultaneously; or

driving and detecting the sensing electrode (19, 57) and driving sensing electrodes (19, 56, 58) peripheral to the sensing electrode (57) simultaneously;

where a signal for driving the sensing electrode and signals for driving the rest of the sensing electrodes and for driving the sensing electrodes peripheral to the sensing electrode simultaneously are same voltage or current signals.

Preferably, the touch control chip detects the capacitance of each sensing electrode through self-capacitance detection.

Preferably, the wires are arranged at a same layer as the plurality of sensing electrodes; or the wires are arranged at a different layer from the plurality of sensing electrodes.
detecting the sensing electrodes group by group.

Preferably, the touch control chip is bound onto the upper surface of the first substrate with a Chip-on-Glass mode.

Preferably, the touch display device further includes:

a Flexible Printed Circuit, which is bound onto the upper surface of the first substrate and is connected to the touch control chip.

Preferably, the touch control chip is configured to detect the self-capacitance of each sensing electrode by:

driving the sensing electrode with a voltage source or a current source; and
detecting a voltage, frequency or electric quantity of the sensing electrode.

Preferably, the touch control chip is configured to determine a touch location based on a two-dimensional capacitance sensing array.

Preferably, the touch control chip is further configured to adjust sensitivity or a dynamic range of touch detection through parameters of the voltage source or the current source, and the parameters comprise one of amplitude, frequency, time sequence or any combination thereof.

Preferably, any of the sensing electrodes can be rectangular, rhombic, circular or elliptic.

Preferably, the sensing electrodes are made of transparent conductive material of Indium Tin Oxide (ITO) or Graphene.

Preferably, the touch display device is in an In-Plane Switching (IPS) structure or Twisted Nematic (TN) structure.

In the touch display device according to the embodiments of the invention, the sensing electrodes are independent from each other and the touch control chip is connected to each sensing electrode by wire, and a real multi-touch detection is achieved. In addition, the touch control chip performs touch detection by detecting the capacitance of each sensing electrode, hence the ability of restraining power supply noise is highly improved and the interference of the noise in the touch detection is reduced. The problem, that the interference of the noise is increased because the noises caused by multiple fingers may be accumulated on a same electrode in the case of touching with multiple fingers on the same electrode, is avoided.

## BRIEF DESCRIPTION OF THE DRAWINGS

Drawings used in the description of embodiments are explained briefly as follows for better understanding of the technical solutions in the embodiments of the invention. Apparently, the drawings described in the following are just some of the embodiments of the invention. Other drawings can be obtained by those skilled in the art based on the drawings without inventive efforts.

Figure 1A is a schematic structure diagram of a touch display device according to an embodiment of the invention.
Figure 1B is another schematic structure diagram of a touch display device according to an embodiment of the invention.
Figure 2 is a top view of a sensing electrode array according to an embodiment of the invention
Figure 3 to Figure 6 illustrate a sensing electrode driving method according to an embodiment of the invention.
Figure 7 illustrates four application scenarios of a capacitive touch screen according to an embodiment of the invention.
Figure 8 is a diagram of the signal flow in a touch control chip according to an embodiment of the invention.
Figure 9A illustrates an example of calculating the coordinate of a touch position using a centroid algorithm.
Figure 9B illustrates an example of calculating the coordinate of a touch position using a centroid algorithm in the presence of noises.
Figure 10 is a control principle diagram of a touch display device in the human-machine interaction processes according to an embodiment of the invention.

## DETAILED DESCRIPTION

A touch display device, which can reduce the interference of noise in the detection of touch point, is provided according to embodiments of the invention.

For better understanding of the technical solution in the application by those skilled in the art, the technical solution in the embodiments of the application will be clearly and completely described hereinafter in conjunction with drawings. Apparently, the embodiments described are merely some embodiments of the application, rather than all embodiments. Any other embodiments obtained based on the embodiments in the application by those skilled in the art without any creative works should fall within the scope of protection of the application. For convenience of illustration, sectional views showing the structure of the device are enlarged partially and are not drawn to scale. The drawings are exemplary and are not intended to limit the protection scope of the invention. Furthermore, in actual manufacture process, three-dimension sizes, i.e. length, width and depth should be considered.

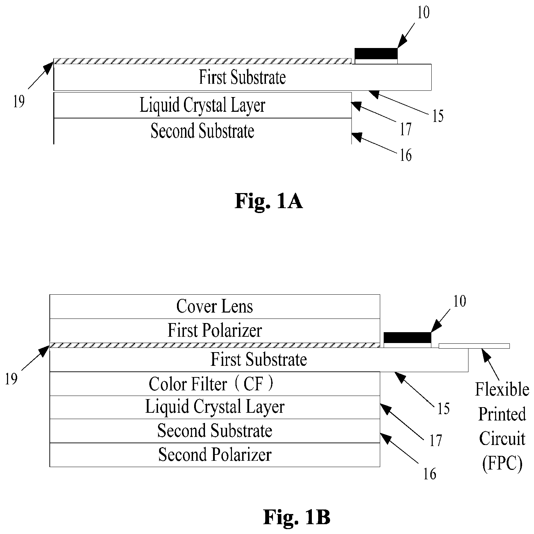

Figure 1A is a schematic structure diagram of a touch display device according to an embodiment of the invention. As shown in Figure 1A, the touch display device includes: a first substrate 15, a second substrate 16 and a liquid crystal layer 17 disposed between the first substrate 15 and the second substrate 16; a plurality of sensing electrodes 19 disposed on the upper surface of the first substrate 15 and arranged in a two-dimensional array; and a touch control chip 10 bound onto the upper surface of the first substrate 15 and connected to each of the plurality of sensing electrodes 19 via wires. The touch control chip 10 detects the capacitance of each sensing electrode. Preferably, the touch control chip 10 detects the capacitance of each of the sensing electrodes 19 by self-capacitance detection.

Referring to Figure 1B, the touch display device according to an embodiment of the invention may further include: a first polarizer, which is disposed above the first substrate 15; a second polarizer, which is disposed below the second substrate 16; a cover lens, which is disposed above the first polarizer; a color filter layer disposed between the first substrate 15 and the liquid crystal layer 17; and a Flexible Printed Circuit (FPC), which is bound onto the upper surface of the first substrate 15 and is connected to the touch control chip 10.

The touch display device is in a structure of In-Plane Switching (IPS) type or Twisted Nematic (TN) type.

The first substrate 15 is transparent, e.g., a glass substrate or a flexible substrate. The plurality of sensing electrodes 19 are disposed on the upper surface of the first substrate 15. The plurality of sensing electrodes 19 are arranged in a two-dimensional array, which can be a rectangular array or in other similar shapes. For a capacitive touch screen, each of the sensing electrodes 19 is a capacitive sensor, of which the capacitance changes when a corresponding location on the touch screen is touched.

Each of the sensing electrodes 19 is connected to the touch control chip 10 by wires. The touch control chip 10 is bound to the upper surface of the first substrate 15. There is a large amount of pins due to that the touch control chip 10 is connected to each of the sensing electrodes 19 via wires, therefore, the touch control chip 10 is bound to the first substrate 15 to avoid the complexity caused by conventional packaging. Specifically, the touch control chip 10 may be bound to the substrate in Chip-on-Glass (COG) mode. An Anisotropic Conductive Film (ACF) may be disposed between the touch control 10 and the first substrate 15 according to this embodiment.

In addition, normally physical space is reserved for the touch control chip and the Flexible Printed Circuit (FPC) according to the connection requirement of the FPC, which is disadvantageous for the simplifying of the system. Contrarily, by combining the touch control chip 10 with the touch screen as a whole in COG mode, the distance between the touch control chip 10 and the touch screen is significantly reduced and hence the overall size is reduced. Furthermore, since the sensing electrodes are formed by etching the Indium Tin Oxide (ITO) on the substrate and the touch control chip is also disposed on the same substrate, the connection wires between the sensing electrodes and the touch control chip can also be achieved through one processing with the ITO etching, and the manufacturing process is significantly simplified. The sensing electrodes may also be made of Graphene.

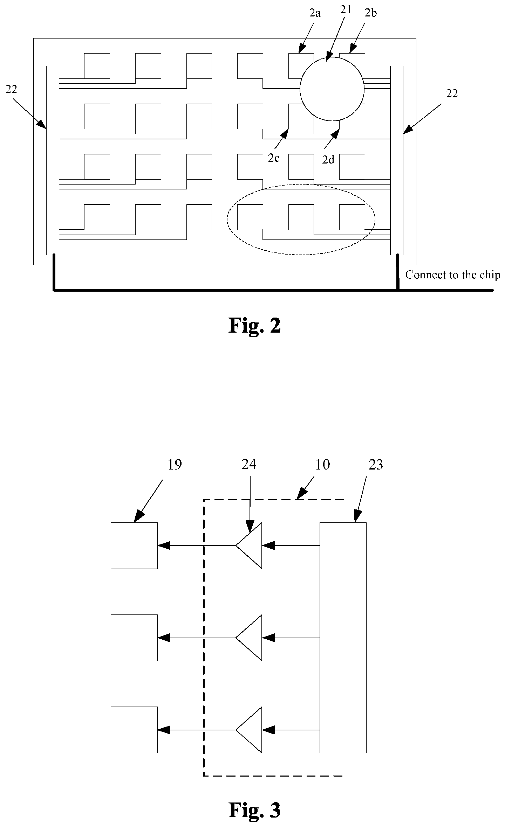

Figure 2 is a top view of a sensing electrode array according to an embodiment of the invention. The sensing electrodes in Figure 2 are divided into a plurality of self-capacitance matrixes. It is easy for those skilled in the art to understand that only one exemplary arrangement of the sensing electrodes is shown in Figure 2, and any two-dimensional array can be adapted for the arrangement of the sensing electrodes in practice. In addition, the distance between any two adjacent sensing electrodes in any direction can be equal or not. It is also to be understood by those skilled in the art that there can be more sensing electrodes than those shown in Figure 2.

It should be understood that Figure 2 only illustrates one exemplary shape of the sensing electrodes. The sensing electrodes can be rectangular, rhombic, circular, elliptic or even in an irregular shape in other embodiments. The sensing electrodes may be in the same or different shapes. For example, the sensing electrodes in the middle are rhombic while those at the edges are triangular. In addition, the sensing electrodes may be in the same or different dimensions. For example, the sensing electrodes in inner part are bigger while those at the edges are smaller, which is advantageous for the wiring and for the touch accuracy at the edges.

Each sensing electrode is routed out via a wire and the wires are disposed in the gaps between the sensing electrodes. Generally the wires are as uniform and short as possible. In addition, the range of the wiring is as narrow as possible under the condition that a safe distance is ensured, thus more space is left for the sensing electrodes and the sensing is more accurate.

As shown in Figure 2, the touch display device further includes at least one bus 22, which is connected to the sensing electrodes in each self-capacitance matrix by the wires and is connected to the touch control chip.

The wires, through which each sensing electrode is connected to the bus 22, are connected to the pins on the touch control chip by the bus 22 directly or after proper ordering. There can be numerous sensing electrodes in a large-scale touch screen. In this situation, a single touch control chip can be configured to control all the sensing electrodes; alternatively multiple touch control chips can be configured to control the sensing electrodes in different regions partitioned on the screen, and the multiple touch control chips can be synchronized with a clock. Here the bus 22 can be divided into several bus groups to connect with different touch control chips, and each touch control chip may control the same or different number of sensing electrodes.

As shown in Figure 2, the wiring can be implemented on the same layer with the sensing electrode array. The wires may be disposed on a layer different from the layer of the sensing electrode array if it is difficult to implement the wiring on the same layer as the sensing electrode array in other structures and the sensing electrodes may be connected via through holes.

The sensing electrode array shown in Figure 2 is based on the principle of self-capacitance touch detection. Each of the sensing electrodes corresponds to a specific location on the screen. In Figure 2, reference numerals 2a-2d represent different sensing electrodes, and reference numeral 21 represents a touch. The electric charges on a sensing electrode change when the location corresponding to the sensing electrode is touched; hence, it may be determined whether a touch event occurs corresponding to the sensing electrode by detecting the electric charges (current/voltage) on the sensing electrode, which is generally implemented by means of analog-to-digital conversion through an Analog-to-Digital Converter (ADC). The change of the electric charges in the sensing electrode is related to the covered area of the sensing electrode, for example, the change of the electric charges on electrode 2b or 2d is bigger than that on electrode 2a or 2c.

Every location on the screen is provided with a corresponding sensing electrode, and there is no physical connection between the sensing electrodes. With the capacitive touch screen according to the embodiments, a real multi-touch control can be implemented, the problem of ghost point in the self-capacitance touch detection in the prior art is avoided, the ability of restraining power supply noise is highly improved, and the interference of noise in the touch detection is reduced.

The touch control chip according to the embodiments detects each sensing electrode in the simultaneous driving mode.

Due to the large amount of wires for the matrix electrodes, the wiring is very narrow in the case that the screen area is limited; hence the resistance is increased and the quality of detecting signal is affected. In view of this problem, the touch control chip in the invention detects each sensing electrode in the simultaneous driving mode. In this way, when one electrode in the matrix is detected, other electrodes not being detected are driven simultaneously based on the signal applied on the current electrode being detected to reduce the voltage differences between the current electrode and the other electrodes; and/or data lines of the display screen are driven simultaneously to reduce the voltage differences between the current electrode being detected and the data lines. The capacitance of the electrode being detected is reduced with this method and thus the resistance (reactance) of the electrode being detected is reduced.

Figure 3 to Figure 7 illustrate a sensing electrode driving method according to the embodiments. As shown in Figure 3, a sensing electrode 19 is driven by a driving source 24, which can be a voltage source or a current source. The driving sources 24 for different sensing electrodes 19 may be in different structures. For example, some of the driving sources are voltage sources and some are current sources. In addition, the driving sources 24 for different sensing electrodes 19 may have a same frequency or not. The time sequences of the driving sources 24 are controlled by a time sequence controlling circuit 23.

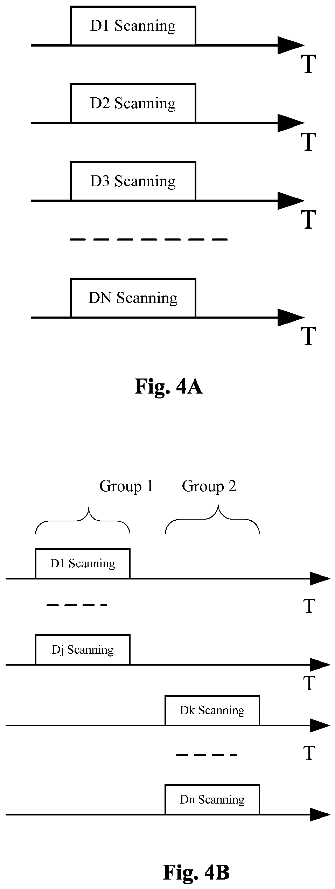

There are multiple options for driving sequences of the sensing electrodes 19. As shown in Figure 4A, all the sensing electrodes are driven and detected simultaneously. For this method the time to finish a scanning is the shortest, while the number of the driving sources is the most (same as the number of the sensing electrodes). As shown in Figure 4B, the driving sources for the sensing electrodes are divided into several groups for sequentially driving electrodes in corresponding regions. The driving sources can be reused in this method, while the scanning time is increased. A compromise may be met between the advantage of reusing the driving sources and the scanning time by selecting a proper number of the groups.

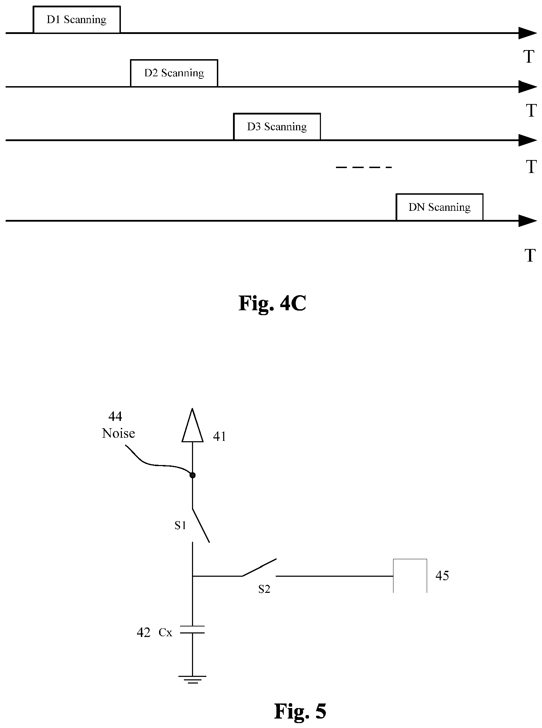

Figure 4C illustrates a conventional scanning method for mutual capacitance touch detection. Supposing that there are N driving channels (TX) and the scanning time of each TX is Ts, then the time for scanning one frame is N*Ts. By contrast, with the sensing electrode driving method according to the embodiments of the invention, the shortest scanning time for one frame is only Ts since all the sensing electrodes are detected simultaneously. That is to say, the scan frame rate can be enhanced by N times with the method according to the invention as compared with the conventional mutual capacitance touch detection.

Considering a mutual capacitance touch screen with 40 driving channels and the scanning time of $500\mu s$ for each driving channel, the scanning time for the whole touch screen (one frame) is 20ms, i.e., the frame rate is 50Hz, which is usually inadequate for good usage experience. The problem can be solved by the solution provided in the embodiments. By arranging the sensing electrodes in a two-dimensional array, all the electrodes may be detected simultaneously, and the frame rate reaches 2000Hz when the detection time for each electrode remains at $500\mu s$, which is highly above application requirements of most touch screens. Excessive scanning data can be utilized by a digital signal processing unit in, for example, anti-interference or touch traces optimization, in order to achieve better effects.

Preferably, the self-capacitance of each sensing electrode is detected. The self-capacitance of the sensing electrode may be the capacitance to the ground of the sensing electrode.

For example, the electric charge detection can be adopted to detect the self-capacitance. As shown in Figure 5, a constant voltage $V_1$ is provided by a driving source 41. The voltage $V_1$ may be positive, negative or equivalent to the ground. References S1 and S2 represent two controlled switches, reference number 42 represents the capacitance to the ground of a sensing electrode, and reference number 45 represents an electric charge receiving module which can clamp an input voltage to a specific value V2 and measure an input or output quantity of the electric charges. Firstly, S1 is on and S2 is off, the upper plate of Cx is charged to the voltage V1 provided by the driving source 41; then S1 is off and S2 is on, Cx exchanges electric charges with the electric receiving module 45. Assuming that the amount of charge transfer is Q1 and the voltage on the upper plate of Cx turns into V2, it may be concluded that Cx=Q1/(V2-V1) from $C=Q/\Delta V$; hence the self-capacitance is detected.

Alternatively, a current source may be used, or the self-capacitance can be detected based on the frequency of the sensing electrode.

Optionally, in the case that multiple driving sources are adopted, when a sensing electrode is detected, a voltage different from that of the driving source adopted for the sensing electrode being detected can be chosen for the sensing electrodes adjacent or peripheral to the sensing electrode being detected. For convenient illustration, Figure 6 shows only three sensing electrodes: an electrode 57 being detected, and two adjacent electrodes 56 and 58. It should be understood by those skilled in the art that the following example is also applicable for situations with more sensing electrodes.

A driving source 54, which is connected to the electrode 57 being detected, is connected to a voltage source 51 through a switch S2 to drive the electrode 57 being detected. The electrodes 56 and 58 adjacent to the electrode 57 being detected are connected to driving sources 53 and 55 respectively, and can be connected to the voltage source 51 or a specific reference voltage 52 (e.g., the ground) through switches S1 and S3 respectively. The electrode being detected and the peripheral electrodes are driven simultaneously by the same voltage source if the switches S1 and S3 are connected to the voltage source 51. In this case, the differences between the electrode being detected and the peripheral electrodes are reduced, which is advantageous for reducing the capacitance of the electrode being detected and preventing a false touch caused by a water drop.

Preferably, the touch control chip is configured to adjust the sensitivity or the dynamic range of touch detection by means of parameters of the driving source. The parameters include any one of the amplitude, the frequency, the time sequence or the combination thereof. As shown in Figure 6, for example, the parameters of each driving source (e.g., the driving voltage, current and frequency) and the time sequence of the driving sources can be controlled by the control logic of a signal driving circuit 50 in the touch control chip. Different circuit operating modes, e.g., high sensitivity, medium sensitivity or low sensitivity, or different dynamic ranges can be adjusted through the parameters.

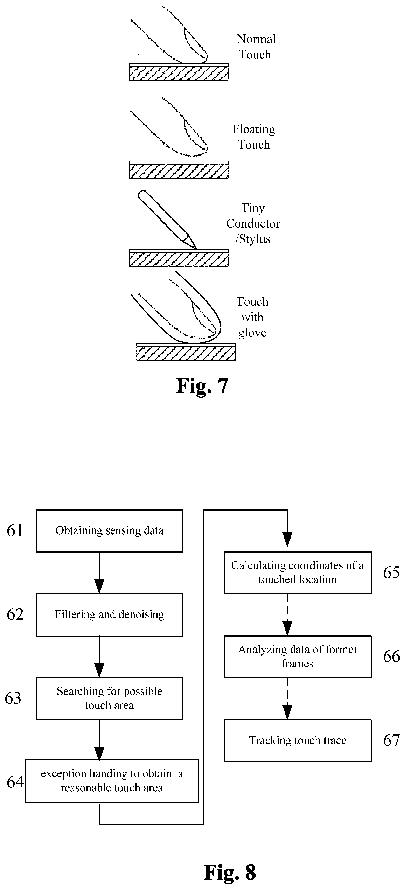

The different circuit operating modes can be configured to different application situations. Figure 7 illustrates four application situations of a capacitive touch screen according to the embodiments of the invention: a normal finger touch, a floating finger touch, a touch with an active/passive stylus or a tiny conductor and a touch with a finger in a glove. One or more normal touches and one or more touches with the tiny conductor can be detected in conjunction with the parameters described above. It should be understood by those skilled in the art that although it is shown in Figure 7 that the signal receiving unit 59 is separated from the signal driving circuit 50, they can be implemented in one circuit in other embodiments.

Figure 8 illustrates a signal flow in a touch control chip according to an embodiment of the invention. A change occurs to the capacitance of a sensing electrode when the sensing electrode is touched, and the change is converted into a digital quantity through an ADC to recover the information of the touch. The change of the capacitance generally is related to a covered area of the sensing electrode by a touch object. The sensing data of the sensing electrode is received by the signal receiving unit 59 and the information of the touch is recovered therefore through a signal processing unit.

The data processing method of the signal processing unit is described in detail as follows.

Step 61: obtaining the sensing data.

Step 62: filtering and denoising the sensing data. This step is to remove as many noises as possible from an original image for the convenience of subsequent calculation. Spatial-domain filtering, time-domain filtering or threshold filtering may be used for this step.

Step 63: searching for possible touch areas. The areas include actual touch areas and invalid signals. The invalid signals include large-area touch signals, power supply noise signals, suspending abnormal signals, water drop signals, etc. In the invalid signals, some can be similar to actual touches, some may interfere with the actual touches, or some may be interpreted as the actual touches.

Step 64: exception handing, which is to remove the invalid signals and obtain a reasonable touch area.

Step 65: calculating coordinates of a touch position based on the data of the reasonable touch area.

Preferably, the coordinates of the touch position can be determined based on a two-dimensional capacitance sensing array. Specifically, the coordinates of the touch position can be determined based on the two-dimensional capacitance sensing array through the centroid algorithm.

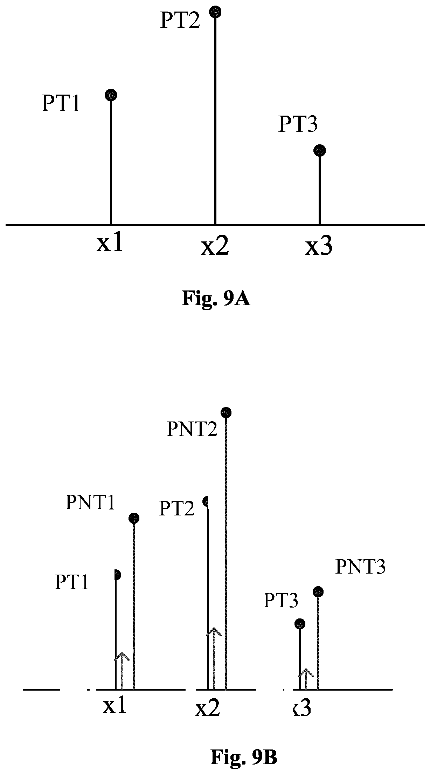

Figure 9A illustrates an example of calculating the coordinates of the touch position through the centroid algorithm. In the following it is only illustrated calculating the coordinate of one dimension of the touch position for brevity. It should be understood by those skilled in the art that, all the coordinates can be obtained with the same or a similar method. Supposing that the electrodes 56 to 58 shown in Figure 6 are covered by finger(s), the corresponding pieces of sensing data are PT1, PT2 and PT3, respectively, and corresponding coordinates are x1, x2 and x3, respectively, then the coordinate of the touch position obtained through the centroid algorithm is:

$$X_{touch} = \frac{PT1 * x1 + PT2 * x2 + PT3 * x3}{PT1 + PT2 + PT3} \qquad (1)$$

Optionally, step 66 of analyzing the data of former frames to obtain the data of a current frame from the data of multiple frames can be performed after obtaining the coordinate of the touch position.

Optionally, step 67 of tracking touch traces based on the data of the multiple frames can be performed after obtaining the coordinate of the touch position. In addition, event information can be obtained and reported based on the operation of the user.

In the implementation of multi-touch, the problem of noise accumulation in the prior art can be solved with the capacitive touch screen according to the embodiments of the invention.

Suggesting that a power supply common-mode noise is introduced to a location 501 as shown in Figure 6, effect on the calculation of the touch position by the noise is analyzed as follows.

In a touch system based on the mutual capacitance touch detection in the prior art, there are a plurality of driving channels (TXs) and a plurality of receiving channels (RXs), and each RX is connected to all the TXs. A common-mode interference signal, once introduced into the system, is transmitted through all the RXs because of the connectivity of the RXs. In particular, in the case that a plurality of noise sources are present in one RX, the noises generated by the noise sources will be accumulated, thereby, the amplitude of the resultant noise is increased. The voltage signal on the capacitor being measured fluctuates because of the noise, hence false detection occurs on an untouched point.

In the capacitive touch screen according to the embodiments of the invention, the sensing electrodes are not physically connected outside the touch control chip, hence the noises can not transmit and accumulate among the sensing electrodes and the false detection is avoided.

Taking the approach of detecting the voltage as an example. The voltage on a touched electrode changes because of the noise, and the sensing data of the touched electrode changes consequently. According to the principle of self-capacitance touch detection, the sensing value caused by the noise is proportional to the covered area of the touched electrode, the same as the case of a normal touch.

Figure 9B illustrates calculating the coordinate of a touch position through the centroid algorithm in with the presence of noise. Supposing that the sensing values caused by the normal touches are PT1, PT2 and PT3, and the sensing values caused by the noises are PN1, PN2 and PN3, then (taking the sensing electrodes 56 to 58 as examples):

PT1 ∝ C58, PT2 ∝ C57, PT3 ∝ C56
PN1 ∝ C58, PN2 ∝ C57, PN3 ∝ C56

here: PN1 = K*PT1, PN2 = K*PT2, PN3 = K*PT3, K is a constant.

In the case that the polarities of the voltages of the noise and the driving source are the same, the final pieces of sensing data because of voltage superposition are:

$$PNT1 = PN1 + PT1 = (1+K)*PT1$$

$$PNT2 = PN2 + PT2 = (1+K)*PT2$$

$$PNT3 = PN3 + PT3 = (1+K)*PT3$$

then the coordinate obtained through the centroid algorithm is:

$$
\begin{aligned}
X_{touch} &= \frac{PNT1 * x1 + PNT2 * x2 + PNT3 * x3}{PNT1 + PNT2 + PNT3} \\
&= \frac{(1+K)*PT1*x1 + (1+K)*PT2*x2 + (1+K)*PT3*x3}{(PT1 + PT2 + PT3)*(1+K)} \\
&= \frac{PT1*x1 + PT2*x2 + PT3*x3}{(PT1 + PT2 + PT3)}
\end{aligned}
\tag{2}
$$

Apparently Formula (2) is the same as Formula (1). Therefore, the capacitive touch screen according to the embodiments of the invention is immune to the common-mode noise. The finally determined coordinate may not be affected if only the noise does not go beyond the dynamic range of the system.

A valid signal may be reduced in the case that the polarities of the voltages of the noise and the driving source are opposite. It can be seen from the above analysis that, the finally determined coordinate is not affected if the reduced valid signal is detectable. The data of the current frame becomes invalid if the reduced valid signal is not detectable. Nevertheless, the data of the current frame can be recovered through the data of multiple frames because the scanning frequency of the capacitive touch screen according to the embodiments of the invention may be up to N (N is usually bigger than 10) times of a normal scanning frequency. It should be understood by those skilled in the art that, a normal report rate may not be affected by the processing with the data of the multiple frames because the scanning frequency is much higher than a practically required report rate.

Similarly, in the case that the noise goes beyond the dynamic range of the system in a limited amount, the current frame can also be recovered through the date of the multiple frames to obtain the right coordinate. This method of inter-frame processing is also applicable for RF immunity and interference from other noise sources such as a liquid crystal display module.

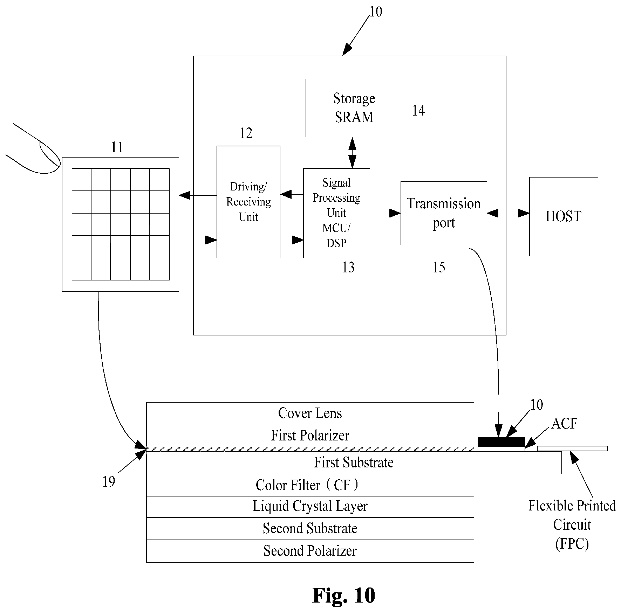

Figure 10 a control principle diagram of a touch display device in the human-machine interaction processes according to an embodiment of the invention. A plurality of sensing electrodes 19, which are arranged in a two-dimensional array, are disposed on a touch screen 11. A user can operate on the touch screen 11 with finger(s) or any other device to input touch information. A touch control chip 10 mainly includes: a driving and receiving unit 12, configured to send a driving signal to the touch screen 11 and receive a signal from the touch screen 11, where the received signal is usually a digital signal converted by ADC; a signal processing unit 13, which can be a Micro Control Unit (MCU) or a Digital Signal Processor (DSP). The signal processing unit 13 is configured to process various signals, recover coordinates and various events from the touch information, and report to a host through a transmission port.

Principles of the invention may be practiced or applied by those skilled in the art based on the above illustration for the disclosed embodiments. Various modifications to the embodiments are apparent for the skilled in the art. The general principle suggested herein can be implemented in other embodiments without departing from the scope of the disclosure. Therefore, the scope of the present disclosure should not be limited to the embodiments disclosed herein, but encompass the widest scope that is in conformity with the principles and the novel features disclosed herein.

**Claims**

1. A touch display device comprising:

   a first substrate (15), a second substrate (16) and a liquid crystal layer (17) disposed between the first substrate (15) and the second substrate (16);
   a plurality of sensing electrodes (19) disposed on the upper surface of the first substrate (15), wherein the plurality of sensing electrodes (19) are arranged in a two-dimensional array; and
   a touch control chip (10) bound onto the upper surface of the first substrate (15), wherein each of the sensing electrodes (19) is connected to the touch control chip via an independent wire;
   wherein the touch control chip (10) configured to detect the capacitance of each sensing electrode (19);
   characterized that the touch control chip (10) is configured to detect each sensing electrode (19, 57) with a simultaneous driving mode,
   the touch control chip (10) being configured in the simultaneous driving mode to detect the self-capacitance of each sensing electrode (19, 57) by:

   driving and detecting a sensing electrode (19, 57) and driving the rest of the sensing electrodes (19, 56, 58) simultaneously; or
   driving and detecting a sensing electrode (19, 57) and driving sensing electrodes (19, 56, 58) peripheral to the sensing electrode (57) simultaneously;
   wherein a signal for driving the sensing electrode and signals for driving the rest of the sensing electrodes and for driving the sensing electrodes peripheral to the sensing electrode simultaneously are same voltage or current signals.

2. The touch display device according to claim 1, wherein the touch control chip (10) detects the capacitance of each sensing electrode (19) through self-capacitance detection.

3. The touch display device according to claim 1, wherein the wires are arranged at a same layer as the plurality of sensing electrodes (2a, 2b, 2c, 2d); or
   the wires are arranged at a different layer from the plurality of sensing electrodes (2a, 2b, 2c, 2d).

4. The touch display device according to claim 1 or 2, wherein the touch control chip (10) is bound onto the upper surface of the first substrate (15) with a Chip-on-Glass mode.

5. The touch display device according to claim 1 or 2, wherein the touch display device further comprises:

   a Flexible Printed Circuit, which is bound onto the upper surface of the first substrate (15) and is connected to the touch control chip (10).

6. The touch display device according to claim 1 or 2, wherein the touch control chip (10) is configured to detect the self-capacitance of each sensing electrode (19, 57) by:

   driving the sensing electrode (19, 57) with a voltage source (51) or a current source; and
   detecting a voltage, frequency or electric quantity of the sensing electrode (19, 57).

7. The touch display device according to claim 1 or 2, wherein the touch control chip (10) is configured to determine a touch location based on a two-dimensional capacitance sensing array.

8. The touch display device according to claim 6, wherein the touch control chip (10) is further configured to adjust sensitivity or dynamic range of touch detection through parameters of the voltage source (51) or the current source, and the parameters comprise one of amplitude, frequency, time sequence or any combination thereof

9. The touch display device according to claim 1 or 2, wherein any of the sensing electrodes (19) is rectangular, rhombic, circular or elliptic.

10. The touch display device according to claim 1 or 2, wherein the sensing electrodes (19) are made of transparent conductive material of Indium Tin Oxide or Graphene.

11. The touch display device according to claim 1 or 2, wherein the touch display device is in an In-Plane Switching structure or Twisted Nematic structure.

**Patentansprüche**

1. Berührungsanzeigevorrichtung, die Folgendes umfasst:

   ein erstes Substrat (15), ein zweites Substrat (16) und eine Flüssigkristallschicht (17), die zwischen dem ersten Substrat (15) und dem zweiten Substrat (16) bereitgestellt ist;
   eine Vielzahl von Abtastelektroden (19), die auf der oberen Oberfläche des ersten Substrats (15) bereitgestellt sind, wobei die Vielzahl von Abtastelektroden (19) in einer zweidimensionalen Matrix angeordnet sind; und
   einen Berührungssteuerungschip (10), der auf die obere Oberfläche des ersten Substrats (15) gebunden ist, wobei jede der Abtastelektroden (19) über einen unabhängigen Draht mit dem Berührungssteuerungschip verbunden ist;
   wobei der Berührungssteuerungschip (10) konfiguriert ist, um die Kapazität von jeder Abtastelektrode (19) zu detektieren;
   **dadurch gekennzeichnet, dass** der Berührungssteuerungschip (10) konfiguriert ist, um jede Abtastelektrode (19, 57) mit einem simultanen Antriebsmodus zu detektieren,
   der Berührungssteuerungschip (10) im simultanen Antriebsmodus konfiguriert ist, um die Eigenkapazität von jeder Abtastelektrode (19, 57) folgendermaßen zu detektieren:

   Antreiben und Detektieren einer Abtastelektrode (19, 57) und simultanes Antreiben des Rests der Abtastelektroden (19, 56, 58); oder
   Antreiben und Detektieren einer Abtastelektrode (19, 57) und simultanes Antreiben der Abtastelektroden (19, 56, 58) peripher zur Abtastelektrode (57);
   wobei ein Signal zum Antreiben der Abtastelektrode und Signale zum Antreiben des Rests der Abtastelektroden und zum simultanen Antreiben der Abtastelektroden peripher zur Abtastelektrode gleiche Spannungs- oder Stromsignale sind.

2. Berührungsanzeigevorrichtung nach Anspruch 1, wobei der Berührungssteuerungschip (10) die Kapazität von jeder Abtastelektrode (19) durch Eigenkapazitätsdetektion detektiert.

3.  Berührungsanzeigevorrichtung nach Anspruch 1, wobei die Drähte an einer gleichen Schicht angeordnet sind wie die Vielzahl von Abtastelektroden (2a, 2b, 2c, 2d); oder die Drähte an einer unterschiedlichen Schicht von der Vielzahl der Abtastelektroden (2a, 2b, 2c, 2d) angeordnet sind.

4.  Berührungsanzeigevorrichtung nach Anspruch 1 oder 2, wobei der Berührungssteuerungschip (10) mit einem Chip-on-Glass-Modus auf die obere Oberfläche des ersten Substrats (15) gebunden wird.

5.  Berührungsanzeigevorrichtung nach Anspruch 1 oder 2, wobei die Berührungsanzeigevorrichtung ferner Folgendes umfasst:

    eine flexible Leiterplatte, die auf die obere Oberfläche des ersten Substrats (15) gebunden ist und die mit dem Berührungssteuerungschip (10) verbunden ist.

6.  Berührungsanzeigevorrichtung nach Anspruch 1 oder 2, wobei der Berührungssteuerungschip (10) konfiguriert ist, um die Eigenkapazität von jeder Abtastelektrode (19, 57) folgendermaßen zu detektieren:

    Antreiben der Abtastelektrode (19, 57) mit einer Spannungsquelle (51) oder einer Stromquelle; und Detektieren einer Spannung, Frequenz oder elektrischen Größe der Abtastelektrode (19, 57).

7.  Berührungsanzeigevorrichtung nach Anspruch 1 oder 2, wobei der Berührungssteuerungschip (10) konfiguriert ist, um eine Berührungsstelle auf der Grundlage einer zweidimensionalen Kapazitätsabtastungsmatrix zu bestimmen.

8.  Berührungsanzeigevorrichtung nach Anspruch 6, wobei der Berührungssteuerungschip (10) ferner konfiguriert ist, um die Empfindlichkeit oder den Dynamikbereich der Berührungsdetektion über Parameter der Spannungsquelle (51) oder der Stromquelle einzustellen, und die Parameter eines von einer Amplitude, Frequenz, Zeitsequenz oder irgendeine Kombination davon umfassen.

9.  Berührungsanzeigevorrichtung nach Anspruch 1 oder 2, wobei irgendeine der Abtastelektroden (19) rechteckig, rautenförmig, kreisförmig oder elliptisch ist.

10.  Berührungsanzeigevorrichtung nach Anspruch 1 oder 2, wobei die Abtastelektroden (19) aus durchsichtigem leitungsfähigen Material aus Indiumzinnoxid oder Graphen hergestellt sind.

11.  Berührungsanzeigevorrichtung nach Anspruch 1 oder 2, wobei die Berührungsanzeigevorrichtung in einer In-Plane-Switching-Struktur oder verdrillten nematischen Struktur ist.


**Revendications**

1.  Dispositif d'affichage tactile comprenant :

    un premier substrat (15), un second substrat (16) et une couche de cristaux liquides (17) disposée entre le premier substrat (15) et le second substrat (16) ;
    une pluralité d'électrodes de détection (19) disposées sur la surface supérieure du premier substrat (15), ladite pluralité d'électrodes de détection (19) étant agencées selon un réseau à deux dimensions ; et
    une puce de commande tactile (10) liée à la surface supérieure du premier substrat (15), chacune desdites électrodes de détection (19) étant reliées à la puce de commande tactile par l'intermédiaire d'un fil métallique indépendant ;
    ladite puce de commande tactile (10) conçue pour détecter la capacité de chaque électrode de détection (19) ;
    **caractérisé en ce que** la puce de commande tactile (10) est conçue pour détecter chaque électrode de détection (19, 57), avec un mode d'excitation simultanée,
    la puce de commande tactile (10) qui est conçue dans le mode d'excitation simultanée pour détecter la capacité propre de chaque électrode de détection (19, 57) en :

        excitant et en détectant une électrode de détection (19, 57) et en excitant le reste des électrodes de détection (19, 56, 58) simultanément ; ou

en excitant et en détectant une électrode de détection (19, 57) et en excitant des électrodes de détection (19, 56, 58) périphériques à l'électrode de détection (57) simultanément ;
un signal permettant l'excitation de l'électrode de détection et des signaux permettant l'excitation du reste des électrodes de détection et permettant d'exciter les électrode de détection périphérique à l'électrode de détection simultanément étant des signaux de même tension ou courant.

2. Dispositif d'affichage tactile selon la revendication 1, ladite puce de commande tactile (10) détectant la capacité de chaque électrode de détection (19) à travers la détection de capacitance propre.

3. Dispositif d'affichage tactile selon la revendication 1, dans lesdits fils métalliques étant disposés dans une même couche que la pluralité d'électrodes de détection (2a, 2b, 2c, 2d) ; ou
lesdits fils métalliques étant agencés dans une couche différent de la pluralité d'électrodes de détection (2a, 2b, 2c, 2d).

4. Dispositif d'affichage tactile selon la revendication 1 ou 2, ladite puce de commande tactile (10) étant liée à la surface supérieure du premier substrat (15) selon un mode de puces sur verre.

5. Dispositif d'affichage tactile selon la revendication 1 ou 2, ledit dispositif d'affichage tactile comprenant en outre :

un circuit imprimé souple, qui est lié à la surface supérieure du premier substrat (15) et est relié à la puce de commande tactile (10).

6. Dispositif d'affichage tactile selon la revendication 1 ou 2, ladite puce de commande tactile (10) étant conçue pour détecter la capacité propre de chaque électrode de détection (19, 57) en :

excitant l'électrode de détection (19, 57) avec une source de tension (51) ou une source de courant ; et
en détectant une tension, une fréquence ou une quantité électrique de l'électrode de détection (19, 57).

7. Dispositif d'affichage tactile selon la revendication 1 ou 2, ladite puce de commande tactile (10) étant conçue pour déterminer un emplacement tactile basé sur un réseau de détection de capacité à deux dimensions.

8. Dispositif d'affichage tactile selon la revendication 6, ladite puce de commande tactile (10) étant conçue en outre pour régler la plage de sensibilité ou dynamique de détection tactile par l'intermédiaire de paramètres de la source de tension (51) ou de la source de courant, et lesdits paramètres comprenant l'un d'une amplitude, d'une fréquence, d'une séquence temporelle ou une quelconque combinaison de ceux-ci.

9. Dispositif d'affichage tactile selon la revendication 1 ou 2, l'une quelconque des électrodes de détection (19) étant rectangulaire, rhombique, circulaire ou elliptique.

10. Dispositif d'affichage tactile selon la revendication 1 ou 2, lesdites électrodes de détection (19) étant constituées de matériau conducteur transparent d'oxyde d'étain et d'indium ou de graphène.

11. Dispositif d'affichage tactile selon la revendication 1 ou 2, ledit dispositif d'affichage tactile étant dans une structure à commutation dans le plan ou nématique torsadée.

**Fig. 1A**

**Fig. 1B**

2a  21  2b

22

22

2c  2d

Connect to the chip

## Fig. 2

19  24  10  23

## Fig. 3

D1 Scanning

T

D2 Scanning

T

D3 Scanning

T

— — — — — —

DN Scanning

T

**Fig. 4A**

Group 1    Group 2

D1 Scanning

T

— — — —

Dj Scanning

T

Dk Scanning

T

— — — —

Dn Scanning

**Fig. 4B**

EP 2 811 379 B1

D1 Scanning

T

D2 Scanning

T

D3 Scanning

T

– – – –

T

DN Scanning

T

**Fig. 4C**

44
Noise

41

S1

S2

45

42 Cx

**Fig. 5**

16

**Fig. 6**

Normal
Touch

Floating
Touch

Tiny
Conductor
/Stylus

Touch
with
glove

**Fig. 7**

```
61 │ Obtaining sensing data
                │
                ▼
62 │ Filtering and denoising
                │
                ▼
63 │ Searching for possible
    │       touch area
                │
                ▼
64 │ exception handing to obtain a
    │    reasonable touch area
```

```
Calculating coordinates of a
       touched location          65
                ┊
                ▼
  Analyzing data of former
          frames                 66
                ┊
                ▼
   Tracking touch trace          67
```

**Fig. 8**

PT2

PT1

PT3

x1    x2    x3

**Fig. 9A**

PNT2

PNT1    PT2

PT1

PNT3

PT3

x1    x2    ⟨3

**Fig. 9B**

10

Storage
SRAM    14

11

12

Driving/
Receiving
Unit

Signal
Processing
Unit
MCU/
DSP

Transmission
port

HOST

13    15

| Cover Lens |
| First Polarizer |
| First Substrate |
| Color Filter（CF） |
| Liquid Crystal Layer |
| Second Substrate |
| Second Polarizer |

10

ACF

Flexible Printed
Circuit
(FPC)

19

**Fig. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005114369 A2
- US 2012306802 A1
- DE 202006010488 U1
- US 2010182273 A1
- EP 2224277 A1
- US 2009153509 A
- US 2012319966 A